# EUROPEAN PATENT SPECIFICATION

(11) **EP 1 359 675 B1**
(45) Date of publication and mention of the grant of the patent: **09.04.2008**
(21) Application number: 02009866.1
(22) Date of filing: 02.05.2002
(51) Int. Cl.: H04B 1/38

(54) **Integrated antenna assembly**
Integrierte Antennenanordnung
Structure d'antenne intégré

(43) Date of publication of application: 05.11.2003
(73) Proprietor: Sony Ericsson Mobile Communications AB, 221 88 Lund (SE)
(72) Inventor: Ying, Zhinong, 226 49 Lund (SE)
(74) Representative: Andersson, Björn E.

(56) References cited:
- US-A- 5 666 159
- US-B1- 6 327 484
- DATABASE WPI Section PQ, Week 200138 Derwent Publications Ltd., London, GB; Class P31, AN 2001-362831 XP002204672 & JP 2001 104241 A (ASAHI OPTICAL CO LTD), 17 April 2001 (2001-04-17)

## Description

### Technical Field of the Invention

The invention relates generally to radio communication systems and, in particular, to the design of built-in miniaturised antennas which allow compact electronic equipment to communicate.

### Background of the Invention

Compact electronic equipment is required to be compact in size, especially when portable. Therefore all components incorporated in portable electronic radio equipment have to fulfil this requirement. Furthermore the spatial arrangement of the components of the portable electronic radio equipment has to be as compact as possible due to the above requirement. On the other hand it is not desired that the components interfere with each other. As more and more features are integrated in portable electronic radio equipment, such as cameras, the requirement of minimal size is harder and harder to fulfil. Therefore a need exists to find new ways of assembling the components of portable electronic radio equipment.

The term portable electronic radio equipment, which hereinafter is referred to as a mobile radio terminal, includes all equipment such as mobile telephones, pagers, communicators, i.e. electronic organisers, smartphones or the like, PDAs (Personal Digital Assistants), portable communication apparatus etc.

Traditionally, older mobile radio terminals were only capable of normal speech communication between two users through a mobile communications network or a public switched telephone network. Historically, mobile radio terminals have often been provided with an antenna mounted externally to the housing of the mobile radio terminal. More recently, mobile radio terminals have been provided with built-in antennas.

Even more recently, short-range supplementary communication services have been introduced for mobile radio terminals. One example of such a short-range supplementary communication service is commonly referred to as Bluetooth® and operates within an unlicensed frequency band at 2,4 GHz, which is often referred to as ISM ("Instrumental, Scientific and Medical") and is globally available. Bluetooth® is intended to provide flexible communication of data and speech between portable devices, such as mobile telephones, mobile computers, other handheld devices and various peripherals for these devices, such as printers, wireless headset accessories, etc.

Furthermore, Wireless Local Area Network (W-LAN) solutions provide extended reach of hard-wired Local Area Networks (LANs) allowing to connect e.g. to the Internet or a corporate network. Wireless LAN access zones are even being installed at public places such as conference areas, hotels, airports and railway stations offering users wireless connection to networks. Future mobile radio terminals will support W-LAN technology. W-LAN is currently based on 2,4 GHz technology, but future products will even support frequencies in the range 5,8 GHz or above for enhanced performance.

Moreover, mobile radio terminals with built-in cameras have been introduced. These mobile radio terminals comprise a camera unit with a camera lens assembly. The mobile radio terminals equipped with said camera units offer the possibility of image communication. The image communication can take place in several ways, such as via the above described wireless Bluetooth® communication for e.g. direct printing of the captured pictures or films, or transmission to other units such as other mobile radio terminals or mobile computers. Another way of transmitting the images is via the above described W-LAN directly to a network, such as an enterprise network, and directly accessing all available network resources such as network printers, networked computers etc. Even another way of transmitting the images is by using a transmission via the above mentioned mobile communications network or public switched telephone network. All transmissions have in common that they are performed electromagnetically wireless and therefore need an antenna for communicating.

A mobile radio terminal for image communication with an integrated camera lens assembly is known from KR-A-2001059498. According to Fig. 3, a mobile radio terminal 20 is described therein and does have an antenna 201 inside a cover 202 extending on the upper side of the housing 200. A camera lens assembly 203 is installed beside an ear piece 204 and a display 205. As mentioned above, it is desired to have such an antenna integrated in or built-in within the housing of the mobile device in order to render the mobile radio terminal more compact.

US 6,327,484 B1 discloses a wireless communications device having a helical antenna which a laser diode is disposed proximate a central axis of the antenna to be able to provide a coherent light emitting from an end portion of the antenna.

JP 2001-104241 A discloses a capsule endoscope having an electric element holder barrel integrally formed with a main block supporting an objective lens and a circuit board of the endoscope. The circuit board has an image sensor, transmitting part for transmitting electric signals output from the image sensor and an antenna control board, which is wound around the outer surface of the electric element holder.

As mobile radio terminals on one hand become smaller and smaller and on the other hand more and more features, such as the above mentioned camera function, are integrated into the mobile radio terminal, various problems are associated with the conventional way of arranging antennas inside conventional mobile radio terminals.

One problem is that an antenna, if integrated in the housing of the mobile radio terminal, as desired, consumes valuable space and renders the mobile radio terminal larger than desired.

Another problem is possible hand interference of the users hand with the electromagnetic field of the antenna. This problem can arise if the antenna is so arranged that the hand of the user holding the mobile device, is due to ergonomic arrangements too near to the antenna and disturbs thus the field of the antenna. Cellular radio circuitry is prioritised in the layout of the printed circuit board, and as a result, in existing mobile radio terminals, the built-in antennas were placed in areas where the performance of the antenna was disturbed by the hand of the user.

A further problem arises if the mobile radio terminal is equipped with multiple antennas, e.g. working in different frequency ranges, because the antennas can disturb each other, if they are positioned too close to each other. In order to avoid this interference, expensive filtering components have to be provided for isolating the antennas from each other.

Furthermore, low loss of the antenna is desired. When integrating antennas in the housing, it is a problem that the housing can absorb transmission energy, which is not desired.

### Summary of the Invention

The present invention overcomes the above-identified deficiencies in the art by providing a miniature, build-in antenna which is integrated with a camera lens according to the appended independent claim.

The invention provides the spatial arrangement or integration of a communication antenna with a camera lens for application in devices where space reduction is a requirement, such as in a mobile radio terminal or a camera. The antenna is integrated into an already existing, previously unused space in such a device comprising the camera or the camera. This space is located on or around the circumferential surface of the lens of the mentioned camera or in the space between the lens and the housing of the device. The lens is usually placed in a free area which both has less interference with the human body and provides an opening in the housing of the device in which the camera and the lens are placed.

According to exemplary embodiments, a built-in miniaturised antenna is provided, which is spatially arranged or integrated with the lens. As a result, the mobile radio terminal, the camera and the antenna arrangement according to the invention have the advantages of providing a space saving, compact antenna arrangement with low loss and little or no interference.

### Brief Description of the Drawings

Preferred embodiments of the present invention will be described in the following detailed disclosure, reference being made to the accompanying drawings, in which
FIG 1 is a schematic front view of a mobile radio terminal according to the invention,
FIG 2 is a perspective view of a helical antenna,

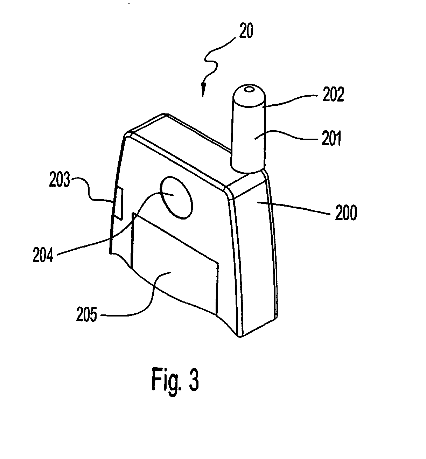

FIG 3 is a perspective view of a prior art mobile radio terminal with an external antenna and a camera,
FIG 4A is a perspective view of a antenna-lens-assembly with a helical antenna spatially arranged in close vicinity to a camera lens, according to a preferred embodiment of the invention,
FIG 4B is a perspective view of a printed circuit board with the antenna-lens-assembly of fig. 4A,
FIG 5A is a planar view of another antenna arranged on a carrier film,
FIG 5B is a perspective view of a spatial arrangement of an antenna assembly of Fig. 5A, according to an alternative embodiment of the invention,
FIGs 6A to 6D are perspective views of alternative antenna arrangements according to alternative embodiments of the invention,
FIGs 7A to 7E are perspective views of further alternative antenna arrangements according to alternative embodiments of the invention, and
Fig. 8 is a perspective view of a carrier for an antenna according to another embodiment of the invention.

### Detailed Description of Embodiments

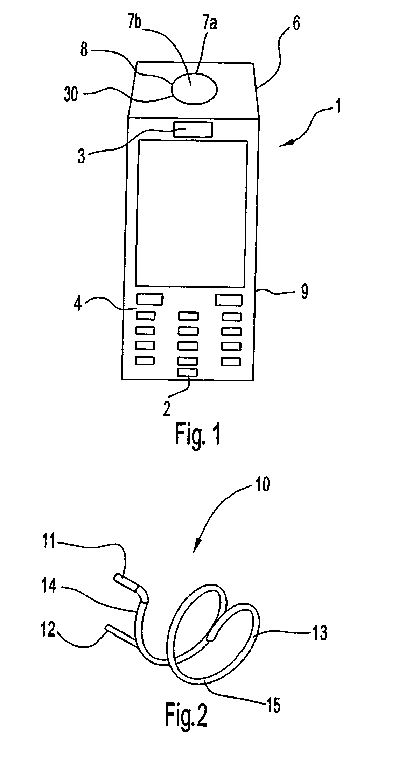

Figure 1 illustrates a mobile radio terminal according to the invention in which an antenna assembly of the present invention is implemented. The mobile radio terminal 1 includes a housing 6 having a microphone 2, a speaker 3, a display 5, a keypad 4 which might be optional if the display 5 is touch-sensitive, a camera unit 7a, a built-in antenna assembly 30 according to the invention having an antenna 8 and an optical lens means 7b, and electronic circuits 9 inside the housing, such as a main controller, memory circuits, radio transceiver etc.

Figure 2 shows a helical antenna 10 having an elongated conductor 13 arranged as a helix, forming an radiating element 15, wherein said elongated conductor 13 preferably has a length which is approximately one-quarter of a wavelength of a desired operating resonant frequency of the antenna. The operating frequency of the antenna is for Bluetooth® or W-LAN in the range of 2,4 GHz, for GSM at about 900 or 1800 MHz or for WCDMA (Wideband Code Division Multiple Access) at about 2000 MHz, but the antenna 10 can be, depending on its length, operated in the frequency range of 800 MHz to 6000 MHz. The antenna 10 furthermore preferably has a grounding pin 11 and a feeding pin 12, whereby the grounding pin 11 is located such that the length of the matching post 14 is used to match the antenna to a desired impedance of a transmitting/receiving unit, such as e.g. 50 Ohms. Those skilled in the art understand that in certain cases the grounding pin 11 is not needed, e.g. a pure helix can be matched for 50 Ohms.

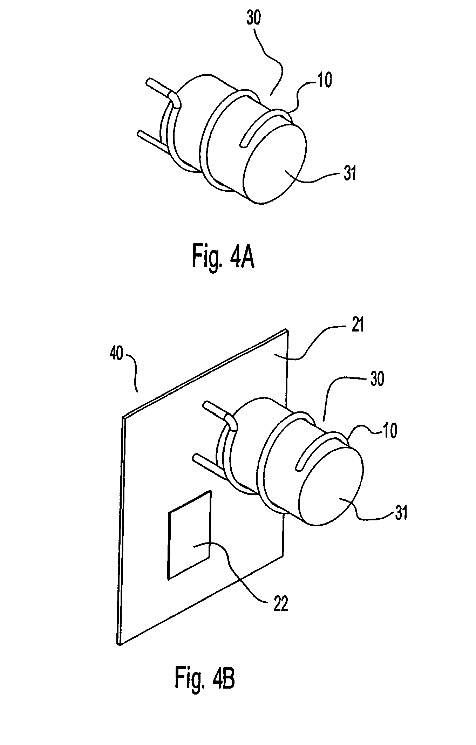

Fig. 4A illustrates a preferred embodiment of an antenna-lens-assembly 30 according to the invention. The antenna 10 is in form of a spiral or a helix and is located on or in the outer side wall or in close proximity around a lens 31 of a camera in a device as mentioned above. Thereby the spiral or helix has a helix trace preferably in the range of a quarter wavelength of the operating wavelength of the antenna. The antenna 10 is arranged along the circumferential outer surface of a generally cylindrical lens body 31. The lens is part of the image capturing part of a camera, such as the camera 7 in the mobile radio terminal 1 in Fig. 1. The lens is made of a transparent material, such as plastic or glass having little or no loss in the working frequency of the antenna 10.

Fig. 4B shows the assembly 30 of the antenna-lens-assembly 30 of Fig. 4A mounted on a printed circuit board 21 and electrically connected to it, e.g. by a pogo-pin or by soldering. The antenna 10, when built-in in such a way into a housing of a compact electronic device, e.g. the housing 6 of mobile radio terminal 1, is much less space consuming than the prior art shown in 2B. This is desired and according to the invention this contributes to the mobile radio terminal being minimal in size.

The printed circuit board is equipped with other components, such as e.g. a CCD image capturing device between the lens and the printed circuit board, an image memory, a driver circuit for a display, etc. These components are only exemplary illustrated as box 22 because it is believed that those skilled in the art are acquainted with the fact that further components exist in order to provide a functioning mobile radio terminal.

As the housing of a mobile radio terminal must have an opening at the location of the camera lens, the antenna assembly is placed into an opening of the housing of a mobile radio terminal. Thus the housing interference of the antenna is minimal because the electromagnetic radiation of the antenna is in said position not influenced by a closed housing. Furthermore user interference is minimised because the hand of the user will be so arranged as not to cover the lens opening because otherwise it would be impossible to take pictures with the camera.

Measurements were undertaken based on an assembly 30 in a device 1. Results for a Bluetooth® antenna in the above mentioned unlicensed frequency band at 2,4 GHz showed that the antenna both solves the above mentioned problems and is working according to specifications, as desired, without disturbing the function of other components.

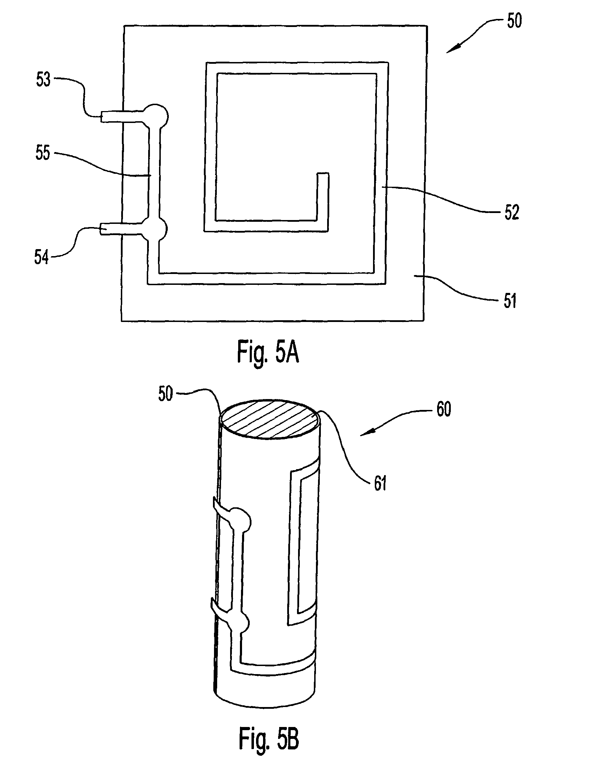

Fig. 5A shows an alternative antenna device 50, wherein an antenna 52 is mounted upon a flexible support element or carrier 51, such as a dielectric plastic film. Such support elements are very thin, in the range of about 100 to 400 µm. Thus the antenna device 50 is very flexible. A single exemplary antenna 52 is illustrated in Fig. 5A, whereby multiple antennas can be implemented on different portions of the film surface or by multi-layer technique.

An alternative embodiment of an antenna-lens-assembly 60 according to the present invention is illustrated in Fig. 5B. The flexible antenna device 50 of Fig. 5A is spatially arranged around a camera lens 61. The film is bent in an appropriate way so as to fit around the lens 61 and is attached to the lens using an appropriate means such as glue or a self-adhesive film. The assembly 60 is arranged similar to Fig. 4B on a printed circuit board.

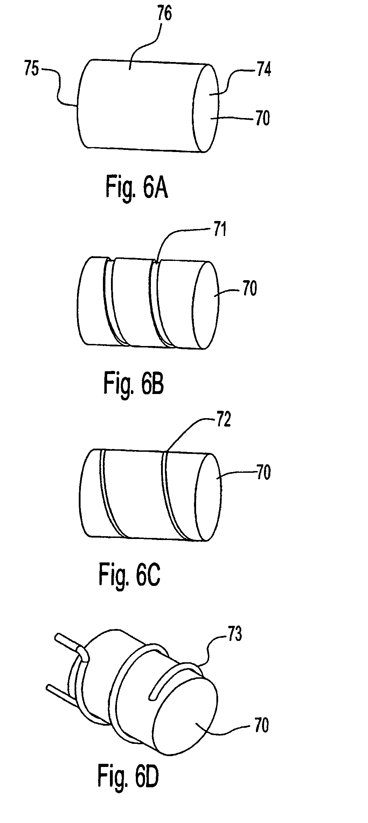

A generally cylindrical lens 70 without an antenna is shown in Fig. 6A. The lens 70 has two ends 74 and 75 and a circumferential side wall. The lens is preferably made of a material which is both transparent, for the imaging function of the camera, and which has a low loss in the microwave region in which the antenna operates, so that the antenna is working effective. Such materials are plastic or glass as mentioned above.

If the lens is part of a fixed-focus camera, i.e. the lens is steadily attached in a fixed position relative to the image capturing means of the camera, e.g. a CCD.

However, if the lens is part of a camera with adjustable focus, the lens has to be movable in order to be able to adjust the focus of the camera.

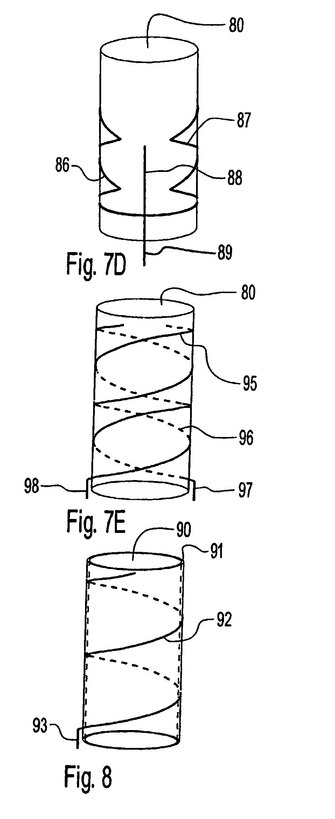

According to this embodiment, the antenna is attached or integrated in the lens, and will thus be moved with the lens when adjusting the camera focus. Therefore a connecting means, such as a flexible connector has to be provided to flexibly connect the antenna to an electrical contact on a printed circuit board within the device. According to another embodiment, illustrated in Fig. 8 and described in detail below, the antenna is attached to a rigid sleeve 91, having a interior free space 90 adapted for a lens to fit inside, thus allowing the lens to be movable if desired without the need for a flexible connection of the antenna as mentioned above.

Furthermore it is to be noted that the expression "lens" even comprises lens units, such as a camera objective comprising several lenses integrated in a common housing, e.g. "zoom-lenses".

Figs. 6B and 6C provide illustrations of further alternative embodiments, wherein Fig. 6B shows an antenna 71 integrated in the lens 70 by means of grooves in the side wall of the lens. An antenna 72 in Fig. 6C is directly attached on the side wall of lens 70. The antenna 72 is attached by appropriate means such as glue or a resilient means. By forming the helical antenna with a diameter slightly smaller than the lens diameter, a resilient press-fitting of the antenna to the lens is achieved. Preferably the antenna is attached to the lens or printed or etched directly on the side wall of the lens body, as shown in the alternative embodiments illustrated in Figs. 6B and Fig. 6C.

In fig. 5D a further embodiment is illustrated, similar to that of Fig. 4A, whereby the antenna 73 has no grounding pin, as mentioned above.

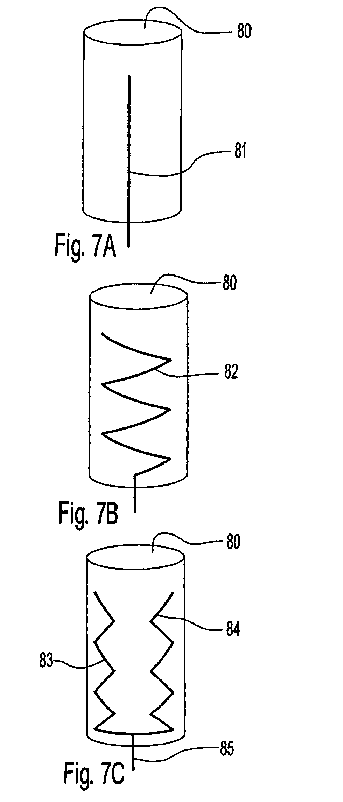

Further alternative embodiments are shown in Figs. 7A to 7E, wherein a lens 80 is shown with attached antennas. The antenna 81 in Fig. 7A is a straight monopole antenna, the antenna 82 in Fig. 7B has a zig-zagged shape, Fig. 7C shows a multi-branch antenna with branches 83, 84 and a common feeding pin 85, Fig. 7D illustrates a multi-branch antenna having 3 branches 86, 87 and 88 and a common feeding pin 89, and fig. 7E shows a arrangement of multiple antennas 95, 96 having respective feeding pins 98, 97. As illustrated in Figs. 7A to 7C, the antenna can be arranged so that it partly covers the surface of lens 80, leaving space for further antennas to be arranged, thus allowing multiple antennas being arranged around a lens.

A sleeve 91 to which an antenna 92 having a feeding pin 93 is attached according to Fig. 8 and presents a further embodiment wherein several feedings for the antennas are used. The shape of the sleeve is adapted to the shape of a respective lens which is housed in the space 90 inside sleeve 91 and is preferably cylindrical. The sleeve is preferably made of a material having low-loss in the microwave range, such as plastic. Sleeve 91 is rigid and the antenna 92 is attached in an appropriate way to the sleeve 91 as described above, including a self-adhesive flexible film on which the antenna is printed or etched and thereafter attached to the sleeve. For illustrative purposes the antenna as shown is attached to the outside of sleeve 91 but can as well be attached to the inside of the sleeve or multiple antennas both on the inside and the outside can be attached to sleeve 91.

Generally, the length of the mentioned antenna devices of the present invention is selected to be approximately one quarter wavelength of the frequency band to which the antenna is tuned. However, one skilled in the art will appreciate that other lengths may be chosen, such a half wavelength. One skilled in the art of antennas will even appreciate that various modifications of the antenna geometry result in a change of the antenna performance, e.g. the pitch angle of a spiral antenna influences the operating bandwidth of the antenna. It is understood that the parameters are adapted in an optimal way to the invention and serve as the basis of further alternative embodiments according to the invention.

If the mobile radio terminal has to work in different frequency ranges, different antennas are conventionally used for each frequency range. According to the invention it is possible to integrate multiple antennas into one single multi-band antenna arrangement around the lens unit.

It has also to be noted that the antenna can transmit images which are produced by the camera unit, but it is not limited to this sole purpose. The antenna can even be used as conventionally for all radio communication of the mobile radio terminal or any other wireless electromagnetic transmission or reception.

There exist a large variety of applications of the antenna-lens-arrangement according to the invention. Some examples are a mobile radio terminal with an integrated digital camera, an external module attachable to a mobile radio terminal comprising a camera-lens-assembly, a digital camera with integrated wireless transmission, a wireless camcorder, a wireless doorphone, a wireless surveillance camera, a unit replacing the rear view mirror in a vehicle with an integrated camera unit located in the back of a car and a wireless transmission unit transmitting the image to a display accessible to the driver of the vehicle, or endoscopic units.

It should be emphasised that the term "comprises/comprising" when used in this specification is taken to specify the presence of stated features, integers, steps or components but does not preclude the presence or addition of one or more other features, integers, steps, components or groups thereof.

The present invention has been described above with reference to specific embodiments. However, other embodiments than the preferred above are equally possible within the scope of the appended claims, e.g. different lens unit forms and shapes, antenna forms and shapes, number of antennas or ways of integrating antennas with a lens unit.

## Claims

1. A mobile radio terminal (1) comprising:
a camera means (7a) for image capturing, including an optical camera lens means (7b, 31, 70) configured for optically directing an image into said mobile radio terminal (1) for image capturing by said camera means (7a), and
a compact antenna assembly including at least one antenna (8, 10, 52, 71, 72, 73) for communication of said mobile radio terminal (1), **characterized in that**
said antenna (8, 10, 52, 71, 72, 73) is attached to a separate sleeve (91) being provided circumferentially positioned around a circumferential side wall (76) of the optical camera lens means (7b, 31, 70), only encircling said optical camera leans means.

2. The mobile radio terminal according to claim 1, wherein a shape of said sleeve is adapted to the shape of a respective lens, which is housed in the space (90) inside the sleeve (91).

3. The mobile radio terminal according to claim 1 or 2, wherein said sleeve is made of a material having low loss in the microwave range, such as plastic.

4. The mobile radio terminal according to claim 1, 2 or 3, wherein said antenna is arranged on a flexible film, which is attached to the sleeve.

5. The mobile radio terminal according to any of the previous claims, wherein multiple antennas are attached to the inside and/or outside of said sleeve.

6. The mobile radio terminal (1) according to any of the previous claims, wherein said optical camera lens means is arranged inside a housing (6) of said mobile radio terminal (1).

7. The mobile radio terminal (1) according to any of the previous claims, wherein said optical camera lens means comprises a generally cylindrical lens body (70) having two ends (74, 75) and said circumferential sidewall (76).

8. The mobile radio terminal (1) according to any of the previous claims, wherein said antenna (10, 52, 71, 72, 73) operates in the frequency range from 800 MHz to 6000 MHz.

9. The mobile radio terminal (1) according to any of the previous claims, wherein said antenna (10, 52, 71, 72, 73) is of spiral or helical form.

10. The mobile radio terminal (1) according to claim 9, wherein said antenna (10, 52, 71, 72, 73) comprises a feeding pin (12) and a grounding pin (11).

11. The mobile radio terminal (1) according to claim 9 or 10, wherein said spiral or helical form has a helix trace of about a quarter wavelength.

12. The mobile radio terminal (1) according to any of the previous claims, wherein said antenna (10, 52, 71, 72, 73) is attached to a carrier (51).

13. The mobile radio terminal (1) according to claim 12, wherein said carrier is a flex-film (51) or a rigid carrier (91).

14. The mobile radio terminal (1) according to claim 12 or 13, wherein said antenna (10, 52, 71, 72, 73) is attached to the carrier by printing or etching and/or pasting.

15. The mobile radio terminal (1) according to any of claims, wherein said antenna (10, 52, 71, 72, 73) is a multi-band antenna.

16. The mobile radio terminal (1) according to any of the previous claims, wherein said lens (31, 70) is of low microwave loss material.

17. The mobile radio terminal (1) according to claim 16, wherein said low microwave loss material is plastic or glass.

18. The mobile radio terminal (1) according to any of the previous claims, wherein said antenna (10, 52, 71, 72, 73) is a monopole or a multipole antenna and has a single branch or multiple-branches and consists of a mono-layer or multiple layers.

19. The mobile radio terminal (1) according to any of the previous claims, whereby said mobile radio terminal is a mobile telephone.

## Patentansprüche

1. Mobil-Funkterminal (1), umfassend:
ein Kamera-Einrichtung (7a) zum Erfassen eines Bildes mit einer optischen Kamera-Linsen-Einrichtung (7b, 31, 70), das konfiguriert ist zum optischen Ausrichten eines Bildes in das Mobil-Funkterminal (1) zur Bilderfassung durch die Kamera-Einrichtung (7a), und
eine Kompaktantennen-Vorrichtung mit zumindest einer Antenne (8, 10, 52, 71, 72, 73) zur Kommunikation des Mobil-Funkterminals (1),
**dadurch gekennzeichnet, dass**
die Antenne (8, 10, 52, 71, 72, 73) mit einer separaten Hülle (91) verbunden ist, die peripher ausgerichtet um eine periphere Seitenwand (76) der optischen Kamera-Linsen-Einrichtung (7b, 31, 70) bereitgestellt wird, und die nur die optische Kamera-Linsen-Einrichtung (7b, 31, 70) umgibt.

2. Mobil-Funkterminal nach Anspruch 1, wobei die Form der Hülle nach der Form der entsprechenden Linse ausgelegt ist, die sich in dem Raum (90) innerhalb der Hülle (91) befindet.

3. Mobil-Funkterminal nach Anspruch 1 oder 2, wobei die Hülle aus einem Material besteht, das einen geringen Verlust im Mikrowellenbereich hat, wie zum Beispiel Plastik.

4. Mobil-Funkterminal nach Anspruch 1, 2 oder 3, wobei die Antenne auf einem flexiblen Film angeordnet ist, der mit der Hülle verbunden ist.

5. Mobil-Funkterminal nach irgendeinem der vorhergehenden Ansprüche, wobei mehrere Antennen mit der Innenseite und/oder der Außenseite der Hülle verbunden sind.

6. Mobil-Funkterminal (1) nach irgendeinem der vorhergehenden Ansprüche, wobei die optische Kamera-Linsen-Einrichtung innerhalb des Gehäuses (6) des Mobil-Funkterminals (1) angeordnet ist.

7. Mobil-Funkterminal (1) nach irgendeinem der vorhergehenden Ansprüche, wobei die optische Kamera-Linsen-Einrichtung einen allgemein zylindrischen Linsenkörper (70) mit zwei Enden (74, 75) und die periphere Seitenwand (76) umfasst.

8. Mobil-Funkterminal (1) nach irgendeinem der vorhergehenden Ansprüche, wobei die Antenne (10, 52, 71, 72, 73) im Frequenzbereich von 800 MHz bis 6000 MHz arbeitet.

9. Mobil-Funkterminal (1) nach irgendeinem der vorhergehenden Ansprüche, wobei die Antenne (10, 52, 71, 72, 73) von spiralartiger oder schraubenartiger Form ist.

10. Mobil-Funkterminal (1) nach irgendeinem der vorhergehenden Ansprüche, wobei die Antenne (10, 52, 71, 72, 73) einen Einspeisungs-Anschluss (12) und einen Erdungs-Anschluss (11) umfasst.

11. Mobil-Funkterminal (1) nach Anspruch 9 oder 10, wobei die spiralartige oder schraubenartige Form eine Spiralspur von circa einer Viertel Wellenlänge aufweist.

12. Mobil-Funkterminal (1) nach irgendeinem der vorhergehenden Ansprüche, wobei die Antenne (10, 52, 71, 72, 73) mit einem Träger verbunden ist.

13. Mobil-Funkterminal (1) nach Anspruch 12, wobei der Träger ein flexibler Film (51) oder ein starrer Träger (91) ist.

14. Mobil-Funkterminal (1) nach Anspruch 12 oder 13, wobei die Antenne (10, 52, 71, 72, 73) mit dem Träger durch ein Schreiben oder ein Ätzen und/oder ein Verleimen verbunden ist.

15. Mobil-Funkterminal (1) nach irgendeinem der Ansprüche, wobei die Antenne (10, 52, 71, 72, 73) eine Multiband-Antenne ist.

16. Mobil-Funkterminal (1) nach irgendeinem der vorhergehenden Ansprüche, wobei die Linse (31, 70) aus einem Material mit geringem Mikrowellen-Verlust besteht.

17. Mobil-Funkterminal (1) nach Anspruch 16, wobei das Material mit geringem Mikrowellen-Verlust Plastik oder Glas ist.

18. Mobil-Funkterminal (1) nach irgendeinem der vorhergehenden Ansprüche, wobei die Antenne (10, 52, 71, 72, 73) eine Monopol- oder eine Multipol-Antenne ist, und eine einzige Verzweigung oder vielfache Verzweigungen aufweist, und aus einer einzigen Schicht oder vielfachen Schichten besteht.

19. Mobil-Funkterminal (1) nach irgendeinem der Ansprüche, wobei das Mobil-Funkterminal ein MobilTelefon ist.

## Revendications

1. Terminal radio mobile (1) comprenant :
un moyen à caméra (7a) pour l'acquisition d'images, comprenant un moyen formant objectif optique de caméra (7b, 31, 70) configuré pour diriger optiquement une image vers ledit terminal radio mobile (1) pour l'acquisition d'images par ledit moyen à caméra (7a), et
un assemblage d'antenne compact comprenant au moins une antenne (8, 10, 52, 71, 72, 73) pour les communications dudit terminal radio mobile (1), **caractérisé en ce que**
ladite antenne (8, 10, 52, 71, 72, 73) est fixée à un manchon séparé (91) qui est prévu de façon à être positionné circonférentiellement autour d'une paroi latérale circonférentielle (76) du moyen formant objectif optique de caméra (7b, 31, 70) pour n'encercler que ledit moyen formant objectif optique de caméra.

2. Terminal radio mobile selon la revendication 1, dans lequel une forme dudit manchon est adaptée à la forme d'un objectif respectif qui est logé dans l'espace (90) à l'intérieur du manchon (91).

3. Terminal radio mobile selon la revendication 1 ou 2, dans lequel ledit manchon est constitué d'un matériau ayant de faibles pertes dans la gamme des micro-ondes, tel qu'une matière plastique.

4. Terminal radio mobile selon la revendication 1, 2 ou 3, dans lequel ladite antenne est disposée sur un film flexible qui est relié au manchon.

5. Terminal radio mobile selon l'une quelconque des revendications précédentes, dans lequel de multiples antennes sont reliées à l'intérieur et/ou à l'extérieur dudit manchon.

6. Terminal radio mobile (1) selon l'une quelconque des revendications précédentes, dans lequel ledit moyen formant objectif optique de caméra est disposé à l'intérieur d'un boîtier (6) dudit terminal radio mobile (1).

7. Terminal radio mobile (1) selon l'une quelconque des revendications précédentes, dans lequel ledit moyen formant objectif optique de caméra comprend un corps d'objectif globalement cylindrique (70) ayant deux extrémités (74, 75) et ladite paroi latérale circonférentielle (76).

8. Terminal radio mobile (1) selon l'une quelconque des revendications précédentes, dans lequel ladite antenne (10, 52, 71, 72, 73) fonctionne dans la gamme de fréquences de 800 MHz à 6000 MHz.

9. Terminal radio mobile (1) selon l'une quelconque des revendications précédentes, dans lequel ladite antenne (10, 52, 71, 72, 73) est de forme spirale ou hélicoïdale.

10. Terminal radio mobile (1) selon la revendication 9, dans lequel ladite antenne (10, 52, 71, 72, 73) comprend une broche d'alimentation (12) et une broche de mise à la masse (11).

11. Terminal radio mobile (1) selon la revendication 9 ou 10, dans lequel ladite forme spirale ou hélicoïdale forme une trace d'hélice d'environ un quart de longueur d'onde.

12. Terminal radio mobile (1) selon l'une quelconque des revendications précédentes, dans lequel ladite antenne (10, 52, 71, 72, 73) est reliée à un support (51).

13. Terminal radio mobile (1) selon la revendication 12, dans lequel ledit support est un film flexible (51) ou un support rigide (91).

14. Terminal radio mobile (1) selon la revendication 12 ou 13, dans lequel ladite antenne (10, 52, 71, 72, 73) est fixée au support par impression ou gravure et/ou collage.

15. Terminal radio mobile (1) selon l'une quelconque des revendications précédentes, dans lequel ladite antenne (10, 52, 71, 72, 73) est une antenne multibande.

16. Terminal radio mobile (1) selon l'une quelconque des revendications précédentes, dans lequel ledit objectif (31, 70) est constitué d'un matériau à faible perte pour les micro-ondes.

17. Terminal radio mobile (1) selon la revendication 16, dans lequel ledit matériau à faible perte pour les micro-ondes est une matière plastique ou un verre.

18. Terminal radio mobile (1) selon l'une quelconque des revendications précédentes, dans lequel ladite antenne (10, 52, 71, 72, 73) est une antenne monopôle ou multipôle et a une branche unique ou de multiples branches et est constituée d'une monocouche ou de multiples couches.

19. Terminal radio mobile (1) selon l'une quelconque des revendications précédentes, dans lequel ledit terminal radio mobile est un téléphone mobile.
